# EUROPÄISCHE PATENTANMELDUNG

(11) **EP 2 299 616 A1**
(43) Veröffentlichungstag der Anmeldung: **23.03.2011**
(21) Anmeldenummer: 09170429.6
(22) Anmeldetag: 16.09.2009
(51) Int. Cl.: H04L 1/00

(54) **Verfahren und System zum Übertragen von Telegrammen**

(71) Anmelder: Siemens Aktiengesellschaft, 80333 München (DE)
(72) Erfinder: Barthel, Herbert, 91074, Herzogenaurach (DE); Stripf, Wolfgang, 76187, Karlsruhe (DE)

(57) **Zusammenfassung**

Die Erfindung betrifft ein Kommunikationsmittel (1) ausgestaltet zum Empfangen von Telegrammen (T1,T2) eines weiteren Kommunikationsmittels (2), mit einem
- ersten Telegrammzähler (11),

wobei der erste Telegrammzähler (11) ausgestaltet ist zur Zuordnung eines Zählwerts (11a) zu einem Telegramm (T1,T2) entsprechend einer Sendereihenfolge der Telegramme (T1,T2), wobei das empfangene Telegramm (T1,T2)
- einen Prüfwert (13) und
- einem Nutzdatenteil (14) aufweist,

und der Prüfwert (13) aus dem Nutzdatenteil (14) und einem Zählwerts (12a) eines zweiten Telegrammzählers (12) des weiteren Kommunikationsmittels (2) generierbar ist,
wobei ein Prüfmittel (21), welches ausgestaltet ist ein erstes empfangenes Telegramm (T1) mit einem zweiten empfangenen Telegramm (T2) zu vergleichen, um bei Ungleichheit zur Synchronisation des ersten Telegrammzählers (11) mit dem zweiten Telegrammzähler (12) den Zählwert (11a) des ersten Telegrammzählers (11) zu inkrementieren.

## Beschreibung

Die Erfindung betrifft ein System zum Übertragen von Telegrammen, mit einem ersten Kommunikationsmittel, welches zum Senden der Telegramme vorgesehen ist, mit einem zweiten Kommunikationsmittel, welches zum Empfangen von Telegrammen vorgesehen ist, wobei das erste Kommunikationsmittel einen ersten Telegrammzähler und das zweite Kommunikationsmittel einen zweiten Telegrammzähler aufweist, wobei der erste Telegrammzähler ausgestaltet ist zur Zuordnung eines Zählwertes zu einem Telegramm entsprechend einer Sendereihenfolge der Telegramme, wobei ein Telegramm einen Prüfwert und einen Nutzdatenteil aufweist, wobei Berechnungsmittel vorhanden sind, welche zum Berechnen des Prüfwertes aus dem Nutzdatenteil und dem Zählwert ausgestaltet sind.

Des Weiteren betrifft die Erfindung ein Verfahren zum Übertragen von Telegrammen zwischen einem ersten Kommunikationsmittel und einem zweiten Kommunikationsmittel, wobei die Kommunikationsmittel entsprechend dem zuvor genannten System ausgestaltet sind.

Auch betrifft die Erfindung ein einzelnes Kommunikationsmittel, welches ausgestaltet ist zum Empfangen von Telegrammen eines weiteren Kommunikationsmittels.

Die Verwendung eines Prüfwertes dient der Gewährleistung von Datenintegrität bei der Datenübermittlung oder -speicherung. Dabei wird ein Wert, im einfachsten Fall eine Prüfsumme, aus Daten eines Telegramms mit einem geeigneten Verfahren bestimmt, z.B. berechnet über einen Cyclic Redundancy Check (CRC). Der sich ergebende Wert wird dann als Prüfwert mitgespeichert bzw. übertragen. Der Empfänger des Telegramms kann aus den Daten ebenfalls einen Prüfwert bestimmen und diesen mit den übertragenen Wert des Senders vergleichen. Sind die beiden Prüfwerte unterschiedlich, liegt ein Fehler, insbesondere eine Übertragungsfehler vor. Sind die beiden Prüfwerte identisch ist die Nachricht mit hoher Wahrscheinlichkeit korrekt übertragen worden.

Aus der EP 1 261 184 A1 ist ein Verfahren zur Fehlerbehebung innerhalb des statischen Anteils eines Datentelegrammes bekannt.

Aus der US 2004/230323 A ist ein Verfahren bekannt, wobei Datentelegramme einen Telegrammzählwert des Senders umfassen. Bei einer Nichtübereinstimmung zwischen dem Zählwert des Senders und dem Zählwert des Empfängers wird der Zählwert des Empfängers auf dem Zählwert des Senders zurückgesetzt, wonach die Kommunikation fortgesetzt wird.

Aus der EP 1 686 732 B1 ist ein Verfahren und eine Vorrichtung bekannt, bei welchem nicht der gesamte Zählwert neben dem Nutzdatenteil des Telegrammes übertragen wird, der Zählwert jedoch trotzdem bei der Bestimmung des Prüfwertes beim Empfänger verwendet wird.

Bei dem zuletzt genannten Verfahren ist es insbesondere von Nachteil, dass zur Bestimmung des Zählwertes beim Empfänger zusätzliche Informationen im übertragenen Telegramm mit übertragen werden müssen.

Es ist daher die Aufgabe der Erfindung, ein System, ein Verfahren sowie einen Kommunikationsteilnehmer bereitzustellen, welche es ermöglichen die Veränderung des Zählwertes beim Empfänger zu erkennen ohne jedoch zusätzliche Informationen in dem Telegramm mit zu übertragen.

Die Aufgabe wird für das eingangs genannte System dadurch gelöst, dass ein Prüfmittel vorhanden ist, welches ausgestaltet ist ein erstes Telegramm mit einem zweiten Telegramm zu vergleichen, um bei Ungleichheit zur Synchronisation der Telegrammzähler den Zählwert des zweiten Telegrammzählers zu inkrementieren. Inkrementieren soll im Sinne der Erfindung hier allgemein gültig für einen Veränderung des Zählwertes stehen. Es ist nicht zwingend, dass mit Inkrementieren gemeint ist, einen Zählwert immer nur um eins zu erhöhen. Durch den Vergleich der beiden Telegramme, wobei das erste Telegramm in zeitlicher Abfolge vor dem zweiten Telegramm gesendet wurde, ist es von besonderem Vorteil, dass aus der Änderung des ersten Telegramms zu dem zweiten Telegramm eine Inkrement-Information für den Zählwert des zweiten Telegrammzählers zurückgewonnen werden kann. Dabei ist es nicht notwendig, wie nach dem Stand der Technik, zusätzliche Informationen zur Zurückgewinnung des Zählwertes in dem übertragenen Telegramm zu übertragen. Bei dieser Idee wird der Effekt ausgenutzt, dass sich durch Einbeziehen eines Zählwertes bei der Ermittlung eines Prüfwertes, beispielsweise einer CRC-Signatur, mit jedem neuen Zählwert auch der Prüfwert bzw. die CRC-Signatur ändert. Dies gilt insbesondere auch bei der Übertragung von konstanten Nutzdaten, wobei es vorkommen kann, dass eine Änderung der Nutzdaten zusammen mit einer Änderung der Zählwerte einen Prüfwert bzw. eine CRC-Signatur ergeben, die der Vorgängersignatur entsprechen. Um diese Unsicherheit auszuschließen, ist die Erfindung vorteilhaft gemäß den weiteren Ausgestaltungen weiterentwickelt.

In einer ersten Weiterentwicklungsstufe ist es von Vorteil, wenn das Prüfmittel weiterhin ausgestaltet ist den Prüfwert mit einem Rücksetzwert zu vergleichen, um bei Gleichheit den Zählwert des zweiten Telegrammzählers auf einen Startwert zurückzusetzen. Eine Rücksetzung auf einen definierten Startwert entspricht dem technischen Effekt einer Initialisierung bzw. eine definierte Ausgangssituation zu erreichen.

Weiterführend ist das System derart ausgestaltet, dass das Prüfmittel den Nutzdatenteil des ersten Telegramms mit dem Nutzdatenteil des zweiten Telegramms vergleichen kann, um bei Ungleichheit den Zählwert des zweiten Telegrammzählers zu inkrementieren. Um die zuvor genannte Unsicherheit weiter abzusichern, wird das Prüfmittel weitergehend dazu ertüchtigt, den Prüfwert des ersten Telegramms mit dem Prüfwert des zweiten Telegramms zu vergleichen, um bei Ungleichheit den Zählwert des zweiten Telegrammzählers zu inkrementieren. Um eine Fehleranfälligkeit zu vermindern, wird durch das Einrechnen des Zählwertes bei der Ermittlung der zu übertragenen Nutzdaten, beispielsweise fehlersichere Daten, mit jedem neuen Zählwert sich auch der Prüfwert ändern, auch wenn sich die zu übertragenen Nutzdaten, beispielsweise fehlersichere Daten nicht ändern. Deshalb kann aus einer Änderung des Telegramms, welches einer Änderung der Nutzdaten oder einer Änderung der Signatur oder einer gleichzeitigen Änderung von beiden Werten entspricht, die Inkrement-Information für den Zählwert empfängerseitig zurückgewonnen werden. Dieser zurückgewonnene Prüfwert bzw. das zurückgewonnene Signaturergebnis wird mit dem im Telegramm übermittelten Prüfwert bzw. Signatur verglichen und wenn die Signaturen identisch sind, dann ist das übertragene Telegramm als fehlerfrei zu betrachten und wird für die weitere Verarbeitung übernommen. Sind die Signaturen nicht identisch wird es verworfen und entweder sofort eine Fehlerreaktion eingeleitet, oder erst noch das nächste Telegramm abgewartet, und geprüft ob dieses fehlerfrei ist. In diesem genannten zweiten Fall wird nach einer abzuwartenden definierten Zeit abgebrochen und die Fehlerreaktion eingeleitet.

Um eine Datenübertragung von Telegrammen weiter zu optimieren wird, insbesondere bei Sensoren oder Aktoren, welche nach dem technischen Prinzip der "IO-Link-Technologie" realisiert sind, ausgenutzt, dass zu übertragene Daten aufgesplittet werden und 2-kanalig übertragen werden.

Für diese weitere Optimierung wird das System derart ausgestaltet, dass das erste Kommunikationsmittel mit dem zweiten Kommunikationsmittel mit einer ersten Datenleitung für einen ersten Kanal und einer zweiten Datenleitung für einen zweiten Kanal verbunden ist, wobei ein Aufteilungsmittel vorhanden ist, welches ausgestaltet ist, die Telegramme in einen ersten Telegrammanteil und einen zweiten Telegrammanteil aufzuteilen und parallel zu übertragen, wobei der erste Telegrammanteil den Nutzdatenanteil und der zweite Telegrammanteil den Prüfwert aufweist. Die parallele Datenübertragung hat den Vorteil, eine Datenübertragungsgeschwindigkeit heraufzusetzen und zusätzlich eine Hamming-Distanz für die Dekodierung ansteigen zu lassen, weil nun mehr Bits für einen möglichen CRC-Prüfwert zur Verfügung stehen. Diese erhöhte Sicherheit lässt wiederum zu, dass diese Datenübertragung, insbesondere IO-Link, auch über ungeschirmte, unvertrillte Kabelverbindungen durchgeführt werden kann, weil durch die erhöhte Hamming-Distanz eine Restfehlerwahrscheinlichkeit weiter gesunken ist.

Um die Sicherheit bei der Übertragung von Telegrammen in dem System weiter zu erhöhen ist es vorteilhaft, wenn ein Überwachungsmittel zur Überwachung einer Laufzeit der Telegramme vorhanden ist, welches mit dem Prüfmittel in Verbindung steht. Zur Telegrammlaufzeitüberwachung, insbesondere nach dem "Ruhestrom-Prinzip", wird vorteilhaft die Laufzeit von einer Telegrammänderung bis zur nächsten Telegrammänderung gemessen. Diese Laufzeitmessung dient zum Einen der Lebend-überwachung des Senders und einer Überwachung der gesamten Kommunikation. Wenn der Empfänger das Telegramm quittiert und in der Quittung ebenfalls eine, oder der gespiegelte zuvor übertragene Prüfwert, enthalten ist, kann der Empfänger wiederum zum Senden seines Quittungstelegramms die gleichen Regeln anwenden wie der Sender für das ursprüngliche Telegramm.

Neben der Übertragung des Prüfwertes zur Fehlerkorrektur bzw. Fehlererkennung kann vorteilhafter Weise das Prüfmittel weiterhin dazu ausgestaltet sein, reservierte Code-Wörter in dem Prüfwert zu erkennen und diese als eine Statusinformation oder eine Steuerinformation zu werten. Durch die reservierten Code-Wörter können dem Empfänger zeigen wie z.B. Communication fault, oder Timeout mitgeteilt werden, ohne hierzu extra Bytes oder Bits in einem Statusbyte zu belegen.

Insbesondere, bei der Anwendung der Datenübertragung für eine sicherheitsgerichtete Datenübertragung, beispielsweise in der Automatisierungstechnik im PROFIBUS Umfeld, ist es im Falle eines erkannten Fehlers, z.B. Signatur-Fehler oder Timeout-Fehler, von Vorteil das der Telegrammempfänger auf sichere Ersatzwerte zurückschalten kann. Dies wird dadurch erreicht, dass das Prüfmittel dazu ausgestaltet ist einen Übertragungsfehler zu erkennen und daraufhin einen Ersatzwert anstelle des Nutzdatenteils im zweiten Kommunikationsmittel gültig zu schalten. Es wird also aufgrund von programmtechnischen Mitteln, wie z.B. einem frei programmierbaren Baustein, ein Umschalten auf sichere Ersatzwerte implementiert, wenn ein Übertragungsfehler erkannt worden ist.

In einer besonders vorteilhaften Ausgestaltung ist das System mit einem Anschluss an einen Feldbus ausgestaltet. Dabei ist der Feldbus beispielsweise als ein PROFI-Safe-Bus ausgelegt und das System als beispielsweise ein IO-Mastermodul, z.B. für Remote, IO-Stationen von Feldbusen, die Schaltsignale auswerten aber auch beim Hochlauf Parametriertelegramme an den Sensor über die Datenleitungen senden. Das System ist dann als ein Gateway-Master mit 1-n Ports für die IO-Link Devices ausgestaltet. Eine derartige Topologie von IO-Link wird auch Tree oder Chicken-Food genannt.

Bei einer Datenübertragung von den zugehörigen Telegrammen über die zuvor gegebenen Kommunikationsstrecken, mit normalerweise ungeschirmten Leitungen, kann diese Datenübertragung nur mit einer relativ niedrigen Bautrate erfolgen. Die Erfindung sorgt dafür, dass die Übertragungsrate erhöht werden kann, weil auf zusätzliche Steuerbits, welche nur unnötig Platz in dem Telegramm belegen, verzichtet werden kann.

Die zuvor zusätzlich übertragenen Status- oder Steuerbits für die Datensicherung in Form einer Quersumme oder in Form einer Signatur kann nun eingespart oder reduziert werden. Dieses kommt einem Anstieg der Nettodateninformation zugute.

Die eingangs genannte Aufgabe wird für ein Verfahren nach den Merkmalen des Verfahrensanspruches dadurch gelöst, dass im zweiten Kommunikationsmittel ein Vergleich zwischen einem ersten Telegramm mit einem zweiten Telegramm ausgeführt wird, und bei Ungleichheit der Telegramminhalte eine Synchronisation des zweiten Telegrammzählers bezüglich des ersten Telegrammzählers durchgeführt wird, wobei die Synchronisationsinformation aus der Änderung der Telegramme zurückgewonnen wird und der zweite Zählwert an den ersten Zählwert angepasst wird. Bei dieser verfahrensgemäßen Lösung wird der technische Effekt ausgenutzt, dass sich bei Einbeziehen eines Prüfwertes für die Telegrammübertragung bei jeder neuen Telegrammübertragung auch ein fortlaufender Zählwert geändert hat und dementsprechend ändert sich auch der Prüfwert des Telegrammes. Also kann sich durch eine Überprüfung von zwei Telegrammen, wenn sich der Inhalt des empfangenen Telegrammes zu dem Vorgängertelegramm geändert hat, die Synchronisationsinformation aus diesem Vergleich zurückgewonnen werden.

Weitere vorteilhafte Ausgestaltungen des Verfahrens sind den verfahrensgemäßen Unteransprüchen zu entnehmen und auch in der Figurenbeschreibung aufgeführt.

Die eingangs genannte Aufgabe wird weiterhin durch ein Kommunikationsmittel, welches ausgestaltet ist zum Empfangen von Telegrammen eines weiteren Kommunikationsmittels mit einem ersten Telegrammzähler, wobei der erste Telegrammzähler ausgestaltet ist, zur Zuordnung eines Zählwertes zu einem Telegramm entsprechend einer Sendereihenfolge der Telegramme, wobei das empfangene Telegramm einen Prüfwert und einen Nutzdatenanteil aufweist, und der Prüfwert aus dem Nuztdatenteil und einem Zählwert eines zweiten Telegrammzählers des weiteren Kommunikationsmittel generierbar ist, dadurch gelöst, dass in diesem Kommunikationsmittel ein Prüfmittel vorhanden ist, welches ausgestaltet ist ein erstes empfangenes Telegramm mit einem zweiten empfangenen Telegramm zu vergleichen, und bei Ungleichheit zur Synchronisation des ersten Telegrammzählers mit dem zweiten Telegrammzähler den Zählwert des ersten Telegrammzählers zu inkrementieren. Vereinfacht gesagt; wird ein Synchronisationsimpuls also indirekt über eine Datenübertragungsstrecke übertragen. Der Kommunikationsteilnehmer, beispielsweise ein Empfänger ausgestaltet als ein IO-Link Sensor für die Automatisierungstechnik, empfängt ein erstes Telegramm und merkt sich dieses Telegramm und empfängt danach ein weiteres Telegramm und merkt sich auch dieses Telegramm. Durch die Telegrammänderung gegenüber dem Vorgänger-Telegramm kann die Synchronisationsinformation in diesem Kommunikationsteilnehmer zurückgewonnen werden.

Als Datenübertragungsstrecke muss nicht zwingend, wie es häufig in der Automatisierungstechnik der Fall ist, die Datenübertragung als eine kabelgebundene Datenübertragungsstrecke ausgeführt werden, sondern es kann ebenso eine Funkübertragungsstrecke zwischen zwei Kommunikationsteilnehmern bzw. zwischen dem ersten Kommunikationsmittel und dem zweiten Kommunikationsmittel angeordnet sein.

Weitere Merkmale des Systems und Schritte bei Ausführung des Verfahrens werden anhand der Zeichnung näher erläutert. Es zeigen:
- FIG 1: ein System zum Übertragen von Telegrammen,
- FIG 2: ein Telegramm mit einem berechnetem Prüfwert,
- FIG 3: zwei Telegramme für eine 2-kanalige Aufteilung,
- FIG 4: ein Übertragungsablauf und
- FIG 5: ein Gateway-Master mit IO-Link Device.

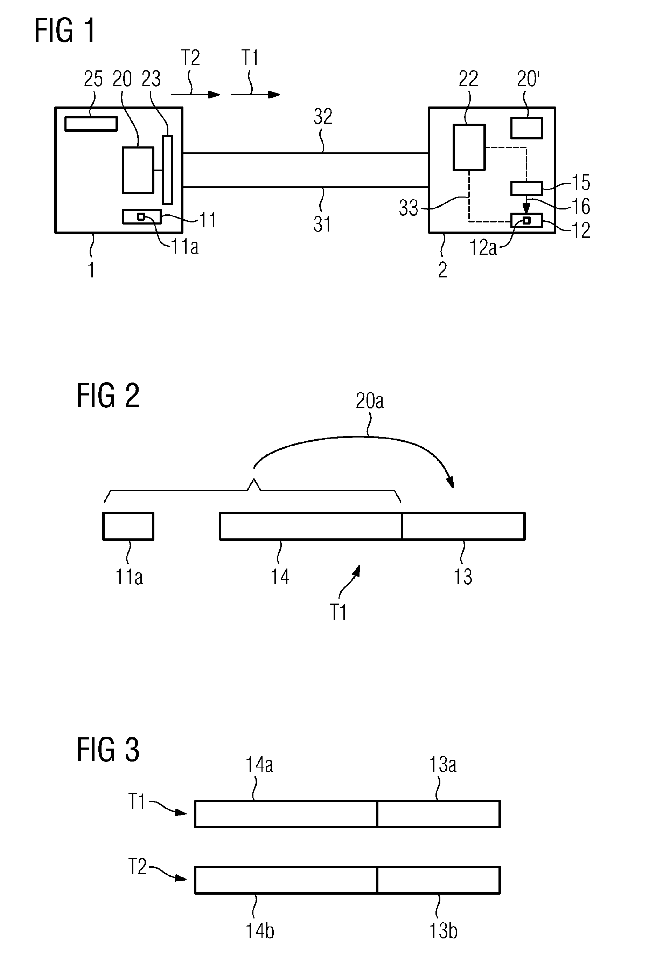

FIG 1 zeigt ein System zum Übertragen von Telegrammen T1,T2 mit einem ersten Kommunikationsmittel 1, welches zum Senden der Telegramme T1,T2 vorgesehen ist, dabei ist das erste Kommunikationsmittel 1 über eine erste Datenleitung 31 und eine zweite Datenleitung 32 mit dem zweiten Kommunikationsmittel 2 verbunden. Die beiden Datenleitungen 31,32 stellen dabei eine Datenübertragungsstrecke dar. Diese Datenübertragungsstrecke könnte beispielsweise aber auch als eine Funkstrecke ausgeführt sein. Das erste Kommunikationsmittel 1 weist einen Telegrammzähler 11 und das zweite Kommunikationsmittel 2 weist einen zweiten Telegrammzähler 12 auf. Das erste Kommunikationsmittel 1 soll im Folgenden als Sender bezeichnet werden und das zweite Kommunikationsmittel 2 wird im Folgenden als Empfänger bezeichnet.

Setzt der Sender ein erste Telegramm T1 zum Empfänger ab, so wird über den ersten Telegrammzähler 11 dem ersten Telegramm T1 ein Zählwert 11a entsprechend einer Sendereihenfolge der abzusendenen Telegramme zugeordnet. Ein Telegramm T1,T2, welches auf die Datenübertragungsstrecke zum Empfänger geschickt wird, weist dabei einen Prüfwert 13 und einen Nutzdatenteil 14 (siehe FIG 2) auf. Im Sender ist weiter ein Berechnungsmittel 20 angeordnet, welches zum Berechnen des Prüfwertes 13 aus dem Nutzdatenteil 14 und dem Zählwert 11a ausgestaltet ist. Zwischen den Datenleitungen 31,32 und dem Berechnungsmittel 20 ist ein erstes Aufteilungsmittel 23 angeordnet. Das Berechnungsmittel 20 ist weiterhin dazu ausgestaltet die Telegramme mit ihrem Nutzdatenteil 14 und ihrem Prüfwert 13 an das erste Aufteilungsmittel 23 weiterzugeben. Das erste Aufteilungsmittel 23 ist dazu ausgestaltet, dass Telegramm T1,T2 derart aufzuteilen, dass mittels der ersten Datenleitung 31 ein erster Kanal und mittels der zweiten Datenleitung 32 ein zweiter Kanal zum Senden von Telegrammen T1,T2 zum Empfänger realisiert ist. Dabei wird beispielsweise über den ersten Kanal, also über die erste Datenleitung 31 der Nutzdatenteil 14 übertragen und über den zweiten Kanal, also über die zweite Datenleitung 32, der Prüfwert 13 übertragen. Zur Überwachung der Datenkommunikation zwischen dem Sender und dem Empfänger weist der Sender ein Überwachungsmittel 25 auf.

Bevor auf die Zurückgewinnung der Synchronisationsinformation im Empfänger anhand des zweiten Prüfmittels 22 im Empfänger näher eingegangen wird, wird anhand von FIG 2 die Berechnung des Prüfwertes 13 beschrieben. Gemäß FIG 2 ist ein erstes Telegramm T1 mit einem Nutzdatenteil 14 und einem Prüfwert 13 abgebildet. Mittels des ersten Telegrammzählers 11 wird jedem Telegramm T1 ein erster Zählwert 11a zugeordnet. In einer einfachen Ausgestaltung ist der Zählwert eine fortlaufende Nummer zu jedem zu sendenen Telegramm.

Um die Sicherheit bei der Erkennung von Telegrammfehlern zu erhöhen, wird der Prüfwert 13 durch eine zyklische Redundanzprüfung ermittelt. Eine solche zyklische Redundanzprüfung ist z.B. ein Cyclic Redundancy (CRC). Ein CRC verwendet zur Bestimmung des Prüfwertes 13 statt einfacher Addition eine Polynomdivision und ist im Allgemeinen effektiver bei der Erkennung von Zufallsfehlern als ein auf einfachen Prüfsummen basierendes Verfahren. Bei dieser Polynomdivision werden zur Ermittlung des Prüfwertes 13 der Zählwert 11a und der Nutzdatenteil 14 als Operanten für die Erzeugung des Prüfwertes 13 herangezogen. Dies ist in FIG 2 dadurch symbolisiert, dass über den Zählwert 11a und dem Nutzdatenteil 14 eine geschweifte Klammer abgebildet ist und nach einem Berechnungsschritt 20a (CRC-Berechnung) der Prüfwert 13 entsteht. Das so berechnete Telegramm T1 kann mit dem Inhalt Nutzdatenanteil 14 und Prüfwert 13 zum Empfänger geschickt werden.

Zurück zu FIG 1, das im Empfänger angeordnete zweite Prüfmittel 22 ist dazu ausgestaltet, ein Vergleich zwischen dem ersten Telegramm T1 mit dem zweiten Telegramm T2 durchzuführen, und bei Ungleichheit der Telegramminhalte eine Synchronisation des zweiten Telegrammzählers 12 im Empfänger bezüglich des ersten Telegrammzählers 11 im Sender, aus der Änderung der beiden Telegramme T1,T2 zurückzugewinnen. Ergibt der Vergleich in dem zweiten Prüfmittel 22 eine Ungleichheit der Telegramminhalte so gibt das zweite Prüfmittel 22 über eine Synchronisationsleitung 33 einen Inkrementierimpuls an den zweiten Telegrammzähler 12, welcher den zweiten Zählwert 12a verwaltet, und mittels des Inkrementierimpulses wird der zweite Zählwert 12a um eins inkrementiert, also auf den gleichen Wert gesetzt wie es der erste Telegrammzähler mit seinem ersten Zählwert 11a gemacht hat. Die beiden Telegrammzähler 11 und 12 sind somit bezüglich ihrer Zählwerte synchronisiert.

Der Empfänger weist ein weiteres Berechnungsmittel 20' auf, mit welchem er anhand des übertragenen Nutzdatenanteils 14 und dem zurückgewonnenen, berechneten zweiten Zählwert 12a den Prüfwert bzw. die CRC-Signatur 13 erneut berechnet. Es wird also empfängerseitig der Prüfwert aus der inkrementieren Telegrammzählerinformation, also die fortlaufende Nummer des Telegramms, unter Zuhilfenahme des übertragenen Nutzdatenanteils 14 neu berechnet. Bei dieser Berechnung ist es günstig, wenn für die Reihenfolge der Prüfwert, CRC-Signatur-Berechnung zuerst die Daten der neu berechneten fortlaufenden Nummer genommen werden.

Der Empfänger weist weiterhin einen Speicher für einen Rücksetzwert 15 auf. In Verbindung mit einer gestrichelt dargestellten Datenleitung kann das zweite Prüfmittel 22 über den Speicher für den Rücksetzwert 15 einen Startwert 16 in den zweiten Telegrammzähler 12 eintragen. Dies ist für eine Initialisierungsphase des zweiten Telegrammzählers 12 vorteilhaft. Das Prüfmittel ist dabei dazu ausgestaltet, den Prüfwert 13 des übertragenen Telegramms T1,T2 mit dem Rücksetzwert 15 zu vergleichen, um bei Gleichheit den Zählwert 12a des zweiten Telegrammzählers 12 auf den Startwert 16 zurückzusetzen.

Gemäß FIG 3 ist das erste Telegramm T1 und das zweite Telegramm T2 für den 2-kanaligen Betrieb einer Datenübertragungsstrecke abgebildet. Wird das erste Telegramm T1 im Zweikanalbetrieb übertragen, so wird ein erster Nutzdatenteil 14a auf der ersten Datenleitung 31 (FIG 1) und ein erster Prüfwert 13a auf der zweiten Datenleitung 32 übertragen. Eine analoge Übertragung gibt sich für das zweite Telegramm T2.

Zur Erhöhung der Datenübertragungssicherheit ist das zweite Prüfmittel 22 weiter dazu ausgestaltet, den Nutzdatenteil 14a des ersten Telegramms T1 mit dem Nutzdatenteil 14b des zweiten Telegramms T2 zu vergleichen, um ebenfalls bei Ungleichheit den Zählwert 12a des zweiten Telegrammzählers 12 zu inkrementieren. Weiterhin ist das zweite Prüfmittel 22, beispielsweise als ein speicherprogrammierbarer Baustein, dazu programmiert, den Prüfwert 13a des ersten Telegramms T1 mit dem Prüfwert 13b des zweiten Telegramms T2 zu vergleichen, um ebenfalls bei Ungleichheit den Zählwert 12a des zweiten Telegrammzählers zu inkrementieren. Zur Zurückgewinnung der Synchronisationsinformation wird der Effekt ausgenutzt, dass sich beim Einrechnen einer fortlaufenden Nummer vor der Telegrammabsendung für, beispielsweise fehlersichere Daten, mit jeder neuen fortlaufenden Nummer, sich auch der Prüfwert bzw. die CRC-Signatur ändert, dieser Prüfwert ändert sich auch wenn die zu übertragenen Daten sich nicht ändern. Deshalb kann aus der Änderung eines Telegrammes zu einem Vorgängertelegramm die Inkrement-Information der fortlaufenden Nummer, also in diesem Fall des zweiten Zählwertes 12a zurückgewonnen werden.

Die Inkrement-Information kann auch allgemein gültig eine Rechenregel sein, welche zwischen dem Sender und dem Empfänger vereinbart ist, d.h., es muss nicht zwangsläufig eine Erhöhung um 1 durchgeführt werden, sondern es kann beispielsweise eine vereinbarte Rechenoperation auf den ersten Zählwert 11a und dem zweiten Zählwert 12a ausgeführt werden. Es muss dabei nur sichergestellt werden, dass diese Rechenoperation im Sender und Empfänger gleich ist.

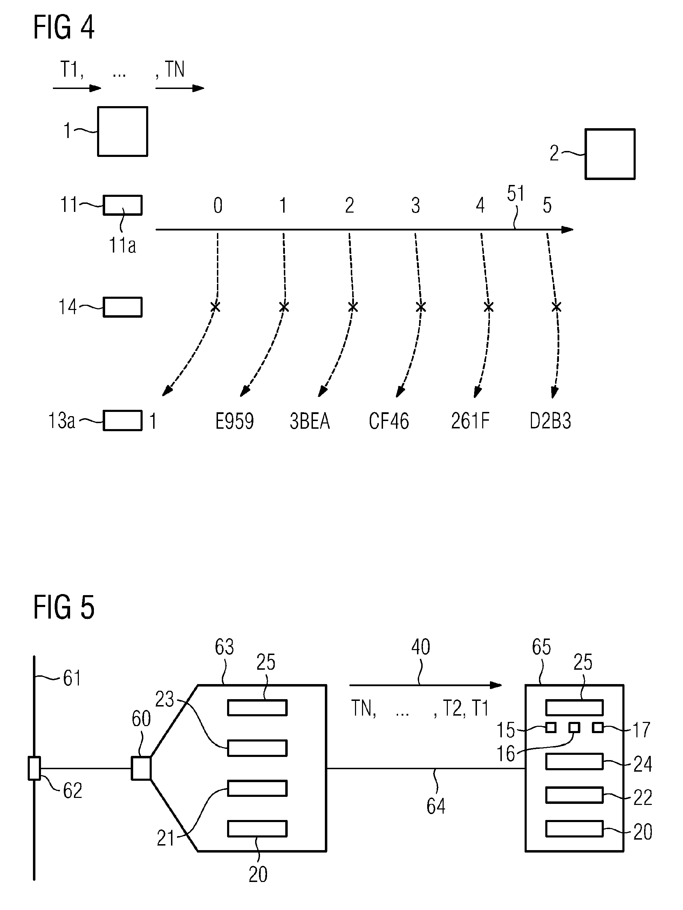

Gemäß FIG 4 ist beispielhaft die Übertragung zwischen dem ersten Kommunikationsmittel 1 und dem zweiten Kommunikationsmittel 2 anhand von Telegrammen T1,...,Tn, wobei n = 0 ... 5 ist, und eine von links nach rechts verlaufende Zeitachse 51 die Sendereihenfolge der Telegramme T1,...,Tn symbolisiert.

Der erste Telegrammzähler 11 mit seinem ersten Zählwert 11a zählt dementsprechend in zeitlicher Abfolge seinen Zählwert von 0 bis 5 hoch. Der zu übertragene Nutzdatenteil 14 soll in diesem Beispiel für alle zu übertragenen Telegramme gleich sein. Der Wert des Nutzdatenteils 14 ist in FIG 4 mit einem X symbolisiert. Die gestrichelten Pfeillinien symbolisieren den in FIG 2 beschriebenen Berechnungsschritt 20a. Das aus FIG 1 bekannte Berechnungsmittel 20, zieht zur Berechnung des Prüfwertes 13a den Wert des Zählwertes 11a und den Wert des Nutzdatenteils 14 heran. Als Wert für den ersten Prüfwert 13a ergibt sich beim ersten Telegramm eine 1. Wird das nächste Telegramm T2 abgeschickt, so hat sich für das Telegramm T2 der erste Zählwert 11a auf 1 erhöht. Die Berechnung, beispielsweise Polynomdivision, aus dem neuen Zählwert mit der Wertigkeit 1 und dem alten Nutzdatenteil mit der Wertigkeit X ergibt zwangsläufig eine andere Wertigkeit für den ersten Prüfwert 13a, nämlich eine Hexadezimalzahl E959. Wie der FIG 4 zu entnehmen ist, ist für jedes Telegramm T1,...,T6 bei der Berechnung über das Berechnungsmittel 20 ein anderer erster Prüfwert 13a zu erwarten.

Gemäß FIG 5 ist ein Gateway-Master 63 über eine Datenübertragungsstrecke 64 mit einem IO-Link Device 65 verbunden. Der Gateway-Master 63 ist mit einem Anschluss 60 für einen Feldbus 61 ausgestaltet. Über eine weitere Datenleitung ist der Gateway-Master 63 an den Feldbus 61 mittels eines Busterminals 62 zur Kommunikation mit einer überlagerten Feldebene angeschlossen.

Der Gateway-Master 63 weist das Berechnungsmittel 20, ein erstes Prüfmittel 21, ein erstes Aufteilungsmittel 23 und ein Überwachungsmittel 25 auf. In einer Sendereihenfolge 40 werden Telegramme Tn,...,T2, T1 zum IO-Link Device 65 übertragen. Auch das IO-Link Device 65 muss zur Zurückgewinnung der Synchronisationsinformation die zuvor genannten Berechnungsmittel und Prüfmittel und Aufteilungsmittel enthalten. Dementsprechend weist das IO-Link Device 65 ein weiteres Berechnungsmittel 20, ein zweites Prüfmittel 22, ein zweites Aufteilungsmittel 24 und ein weiteres Überwachungsmittel 25 auf. Weiterhin weist das IO-Link Device 65 Speicher für einen Rücksetzwert 15, einen Startwert 16 und einen Ersatzwert 17 auf.

Bei IO-Link Devices handelt es sich beispielsweise um digitale Sensoren, die auf kapazitiven, magnetischen, transformatorischen, sonoren und anderen Effekten beruhen. Diese Sensoren liefern nicht nur digitale Schaltsignale, wie z.B. 24 Volt/0 Volt, sondern benötigen auch Parameterdaten und liefern Diagnosedaten. Um diese Daten entsprechend zu verwalten und eine bidirektionale, sichere Datenkommunikation zwischen dem Gateway-Master 63 und dem IO-Link Device 65 dazu gewährleisten, sind beide Kommunikationsteilnehmer entsprechend der zuvor genannten Ausführungen ausgestaltet und für diese neue Art der Kommunikation zur Zurückgewinnung eines Synchronisationssignals ertüchtigt.

Viele sicherheitsgerichtete Sensoren, wie z.B. Lichtgitter, Laserscanner, Zweihandtaster, Trittmatten, usw. bieten als Schnittstelle üblicherweise nur ein 1-kanaliges digitales Abschaltsignal. Auf vorteilhafte Weise wird, wie in FIG 1 dargestellt, zwischen den beiden Kommunikationsteilnehmern ein zweiter Kanal aufgebaut um die Datenübertragung zu erhöhen.

Als weitere Vorteile sind zu nennen:
Bei der Übertragung von Code-Wörtern für die Nutzung als Statusinformation oder Steuerinformation wird die Tatsache ausgenutzt, dass das Herausnehmen eines Code-Wortes (z.B. 0) aus allen möglichen Signaturergebnissen die Restfehlerwahrscheinlichkeit nur um den Faktor 1/(2ⁿ) auf den Wert 1/(2ⁿ-1) verschlechtert. Dieses herausgenommene Code-Wort könnte z.B. als Null-Code-Wort für einen Reset der fortlaufenden Nummer bzw. des zweiten Zählwertes 12a dienen.

Beispielsweise ergibt sich für n = 16 eine normale Restfehlerwahrscheinlichkeit von 1,52588•10⁻⁵ und bei einem herausgenommenen Code-Wort eine Restfehlerwahrscheinlichkeit von 1,52590•10⁻⁵. Der Vorteil liegt darin, dass unter Verwendung von beispielsweise existierenden IO-Link Telegrammtypen, ohne Erhöhung des Datenaufkommens und ohne Informationsverlust, die Daten ebenso schnell übertragen, und trotzdem eine ausreichend hohe Datensicherheit erreicht wird. Beispielsweise bedeutet dies, dass das Auftreten eines unerkannten Fehlers bei ungeschirmten Kabeln in der Datenübertragungsstrecke kleiner ist als einmal in 10⁹ Stunden. Die durch das Verfahren erreichte geringere Restfehlerrate ist für eine sichere Kommunikation mit der Sicherheitsstufe 3 der IEC61508 gefordert (SIL3).

Die Restfehlerwahrscheinlichkeit wird durch die Einsparung der nach dem Stand der Technik bekannten benötigten Control- bzw. Status-Bits bei einer Bitfehlerrate von 10⁻¹ um den Faktor 30 bis 1000 verbessert. Abhängig von der Länge der Daten und der CRC-Signatur wird so der Einsatz in der Sicherheitstechnik ermöglicht, obwohl die derzeit bekannte IO-Link Daten-Darstellung erhalten bleibt.

## Patentansprüche

1. System zum Übertragen von Telegrammen (T1,T2), mit
- einem ersten Kommunikationsmittel (1), welches zum Senden der Telegramme (T1,T2) vorgesehen ist,
- mit einem zweiten Kommunikationsmittel (2), welches zum Empfangen von Telegrammen (T1,T2) vorgesehen ist,
wobei
das erste Kommunikationsmittel (1) einen
- ersten Telegrammzähler (11) und
das zweite Kommunikationsmittel (2) einen
- zweiten Telegrammzähler (12) aufweist,
wobei der erste Telegrammzähler (11), ausgestaltet ist zur Zuordnung eines Zählwerts (11a) zu einem Telegramm (T1,T2) entsprechend einer Sendereihenfolge (40) der Telegramme (T1,T2),
wobei ein Telegramm (T1, T2)
- einen Prüfwert (13) und
- einem Nutzdatenteil (14) aufweist,
wobei Berechnungsmittel (20) vorhanden sind, welche zum Berechnen des Prüfwertes (13) aus dem Nutzdatenteil (14) und dem Zählwert (11a, 12a) ausgestaltet sind, **gekennzeichnet durch**
ein Prüfmittel (21), welches ausgestaltet ist ein erstes Telegramm (T1) mit einem zweiten Telegramm (T2) zu vergleichen, um bei Ungleichheit zur Synchronisation der Telegrammzähler (11,12) den Zählwert (12a) des zweiten Telegrammzählers (12) zu inkrementieren.

2. System nach Anspruch 1, wobei das Prüfmittel (21,22) weiterhin ausgestaltet ist den Prüfwert (13) mit einem Rücksetzwert (15) zu vergleichen, um bei Gleichheit den Zählwert (12a) des zweiten Telegrammzählers (12) auf einen Startwert (16) zurück zusetzen.

3. System nach einem der Ansprüche 1 oder 2, wobei das Prüfmittel (21,22) ausgestaltet ist den Nutzdatenteil (14a) des ersten Telegramms (T1) mit dem Nutzdatenteil (14b) des zweiten Telegramms (T2) zu vergleichen, um bei Ungleichheit den Zählwert (12a) des zweiten Telegrammzählers (12) zu inkrementieren.

4. System nach einem der Ansprüche 1 bis 3, wobei das Prüfmittel (21,22) ausgestaltet ist den Prüfwert (13a) des ersten Telegramms (T1) mit dem Prüfwert (13b) des zweiten Telegramms (T2) zu vergleichen, um bei Ungleichheit den Zählwert (12a) des zweiten Telegrammzählers (12) zu inkrementieren.

5. System nach einem der Ansprüche 1 bis 4, wobei
- das erste Kommunikationsmittel (1) mit dem zweiten Kommunikationsmittel (2) mit
o einer ersten Datenleitung (31) für einen ersten Kanal und
o einer zweiten Datenleitung (32) für einen zweiten Kanal verbunden ist, wobei
- ein Aufteilungsmittel (23,24) vorhanden ist, welches ausgestaltet ist, die Telegramme (T1,T2) in
o einen ersten Telegrammanteil und
o einen zweiten Telegrammanteil aufzuteilen und parallel zu übertragen, wobei
- der erste Telegrammanteil den Nutzdatenteil (14) und der zweite Telegrammanteil den Prüfwert (13) aufweist.

6. System nach einem der Ansprüche 1 bis 5, wobei ein Überwachungsmittel (25) zur Überwachung einer Laufzeit (50) der Telegramme (T1,T2) vorhanden ist, welches mit dem Prüfmittel (21) in Verbindung steht.

7. System nach einem der Ansprüche 1 bis 6, wobei das Prüfmittel (21,22) weiterhin dazu ausgestaltet ist, reservierte Code-Wörter in dem Prüfwert (13) zu erkennen und diese als eine Statusinformation oder eine Steuerinformation zu werten.

8. System nach einem der Ansprüche 1 bis 7, wobei das Prüfmittel (22) dazu ausgestaltet ist, einen Übertragungsfehler zu erkennen und daraufhin einen Ersatzwert (17) anstelle des Nutzdatenteils (14) im zweiten Kommunikationsmittel (2) gültig ist.

9. System nach einem der Ansprüche 1 bis 8, mit einem Anschluss (60) an einen Feldbus (61).

10. Verfahren zum Übertragen von Telegrammen (T1, T2) zwischen
- einem ersten Kommunikationsmittel (1), welches zum Senden der Telegramme (T1, T2) vorgesehen ist, und
- einem zweiten Kommunikationsmittel (2), welches zum Empfangen von Telegrammen (T1, T2) vorgesehen ist,
bei welchen Verfahren im
ersten Kommunikationsmittel (1) ein
- erster Telegrammzähler (11) und im
zweiten Kommunikationsmittel (2) ein
- zweiter Telegrammzähler (12)
zur Zuordnung eines Zählwerts (11a, 12a) zu einem Telegramm (T1,T2) entsprechend einer Sendereihenfolge der Telegramme (T1,T2) verändert wird,
wobei ein Telegramm (T1, T2)
- einen Prüfwert (13) und
- einem Nutzdatenteil (14) aufweist,
wobei im ersten Kommunikationsmittel der Prüfwert (13) aus dem Nutzdatenteil (14) und dem ersten Zählwert (11a) berechnet wird,
**dadurch gekennzeichnet, dass** im zweiten Kommunikationsmittel (2) ein Vergleich zwischen einem ersten Telegramm (T1) mit einem zweiten Telegramm (T2) ausgeführt wird, und bei Ungleichheit der Telegramminhalte eine Synchronisation des zweiten Telegrammzählers (12) bezüglich des ersten Telegrammzähler (11) durchgeführt wird, wobei die Synchronisationsinformation aus der Änderung der Telegramme zurück gewonnen wird und der zweite Zählwert (12a) an den ersten Zählwert (11a) angepasst wird.

11. Verfahren nach Anspruch 10, wobei der Prüfwert (13) mit einem Rücksetzwert (15) verglichen wird, und bei Gleichheit der zweite Zählwert (12a) des zweiten Telegrammzählers (12) auf einen Startwert (201) zurückgesetzt wird.

12. Verfahren nach einem der Ansprüche 10 oder 11, wobei der Nutzdatenteil (14a) des ersten Telegramms (T1) mit dem Nutzdatenteil (14b) des zweiten Telegramms (T2) verglichen wird, und bei Ungleichheit der Zählwert (12a) des zweiten Telegrammzählers (12) an den ersten Zählwert (11a) angepasst wird.

13. Verfahren nach einem der Ansprüche 10 bis 12, wobei der Prüfwert (13a) des ersten Telegramms (T1) mit dem Prüfwert (13b) des zweiten Telegramms (T2)verglichen wird, und bei Ungleichheit der Zählwert (12a) des zweiten Telegrammzählers (12) an den ersten Zählwert (11a) angepasst wird.

14. Verfahren nach einem der Ansprüche 10 bis 13, wobei die Telegrammübertragung über
o einen ersten Kanal und
o einen zweiten Kanal durchgeführt wird, wobei die Telegramme (T1, T2) in
o einen ersten Telegrammanteil und
o einen zweiten Telegrammanteil aufgeteilt und parallel übertragen werden, wobei
- der erste Telegrammanteil den Nutzdatenteil (14) und der zweite Telegrammanteil den Prüfwert (14) aufweist.

15. Verfahren nach einem der Ansprüche 10 bis 14, wobei eine Laufzeit (50) der Telegramme überwacht wird, indem die Zeit zwischen zwei ungleichen Telegrammen gemessen wird.

16. Verfahren nach einem der Ansprüche 10 bis 15, wobei reservierte Code-Wörter mit dem Prüfwert (13) verglichen werden und bei Gleichheit diese reservierten Code-Wörter als eine Statusinformation oder eine Steuerinformation ausgewertet werden.

17. Verfahren nach einem der Ansprüche 10 bis 16, wobei ein Übertragungsfehler erkannt wird und ein Ersatzwert (17) anstelle des Nutzdatenteils (14) im zweiten Kommunikationsmittel (2) bereitgestellt wird.

18. Kommunikationsmittel (1) ausgestaltet zum Empfangen von Telegrammen (T1,T2) eines weiteren Kommunikationsmittels (2), mit einem
- ersten Telegrammzähler (11),
wobei der erste Telegrammzähler (11) ausgestaltet ist zur Zuordnung eines Zählwerts (11a) zu einem Telegramm (T1,T2) entsprechend einer Sendereihenfolge der Telegramme (T1,T2), wobei das empfangene Telegramm (T1,T2)
- einen Prüfwert (13) und
- einem Nutzdatenteil (14) aufweist,
und der Prüfwert (13) aus dem Nutzdatenteil (14) und einem Zählwerts (12a) eines zweiten Telegrammzählers (12) des weiteren Kommunikationsmittels (2) generierbar ist, **gekennzeichnet durch**
ein Prüfmittel (21), welches ausgestaltet ist ein erstes empfangenes Telegramm (T1) mit einem zweiten empfangenen Telegramm (T2) zu vergleichen, um bei Ungleichheit zur Synchronisation des ersten Telegrammzählers (11) mit dem zweiten Telegrammzähler (12) den Zählwert (11a) des ersten Telegrammzählers (11) zu inkrementieren.
